# EUROPEAN PATENT APPLICATION

(11) **EP 4 653 767 A1**
(43) Date of publication of application: **26.11.2025**
(21) Application number: 25171945.6
(22) Date of filing: 23.04.2025
(51) Int. Cl.: F23R 3/12, F23R 3/28

(54) **TURBINE ENGINE HAVING A FUEL NOZZLE**

(30) Priority: 22.05.2024 US 202418671077
(71) Applicant: General Electric Company, Cincinnati, Ohio 45215 (US)
(72) Inventor: VENTURATO, Marco, Evendale, 45215 (US); ROYER, Brian, Evendale, 45215 (US); KNOLLE, Bernard Gustav, Evendale, 45215 (US); SHEALY, James, Evendale, 45215 (US)
(74) Representative: Openshaw & Co.

(57) **Abstract**

A turbine engine (10) comprises a compression section (12), a combustion section (14, 200, 400), and a turbine section (16) arranged in serial flow. The combustion section (14, 200, 400) includes a wall (44, 46, 202, 402, 466, 468) at least partially forming a combustion chamber (46, 204), the wall having a fuel nozzle opening (203). A fuel nozzle (206, 306, 406, 506) extends through the fuel nozzle opening (203) and comprises a fuel nozzle body (208, 308, 408, 508) having a centerline (226, 326, 426, 526) and a continuous curvilinear structure (210, 310, 410, 510) bounding an interior (220, 320, 420, 520). The interior (220, 320, 420, 520) opens to the combustion chamber (46, 204) at an outlet (222, 322, 422, 522), and the continuous curvilinear structure (210, 310, 410, 510) terminates at a distal end (212, 312, 412, 512) having a curvilinear centerline (224, 324, 424, 524). A set of fuel injection channels (230, 330) is provided within the fuel nozzle body (208, 308, 408, 508) and opens into the interior (220, 320, 420, 520) at a set of fuel injection orifices (232, 332) spaced axially about the fuel nozzle body relative to the curvilinear centerline (224, 324, 424, 524).

## Description

### TECHNICAL FIELD

The present subject matter relates generally to a turbine engine, and more specifically to a turbine engine having a combustion section including a fuel nozzle.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

The use of hydrocarbon fuels in the combustor of a turbine engine is known. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbon (UHC) (e.g., methane and volatile organic compounds that contribute to the formation of atmospheric ozone), and other oxides, including oxides of sulfur (e.g., SO₂ and SO₃).

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic representation of a turbine engine, the turbine engine including a compression section, a combustion section, and a turbine section.
FIG. 2 depicts a cross-section view of the combustion section taken along line II-II of FIG. 1, further illustrating a set of fuel nozzles.
FIG. 3 is a schematic of a side cross-sectional view taken along line III-III of FIG. 2, further illustrating a fuel nozzle exhausting into a combustion chamber.
FIG. 4 is a schematic side cross-sectional view of a combustion section suitable for use as the combustion section of FIG. 2, further including a wall and a fuel nozzle comprising a fuel nozzle body, a plurality of jets, and a plurality of air orifice opening, the fuel nozzle body having a centerline and a curvilinear centerline.
FIG. 5 is a schematic view of the fuel nozzle as seen from sight-line V-V of FIG. 4 with the fuel nozzle being removed from the wall, further illustrating a set of vortex generators provided along the fuel nozzle body.
FIG. 6 is a schematic view of the combustion section as seen from sight line V-V of FIG. 4, further illustrating a set of fuel nozzles provided along the wall.
FIG. 7 is a schematic view of an exemplary fuel nozzle suitable for use within the combustion section of FIG. 4, further illustrating a set of vortex generators provided along the fuel nozzle body.
FIG. 8 is a schematic view of an exemplary combustion section suitable for use as the combustion section of FIG. 4, further including a fuel nozzle with a fuel nozzle body having a curvilinear centerline in a spiral-formation.
FIG. 9 is a schematic view of an exemplary fuel nozzle suitable for use within the combustion section of FIG. 4, further including a fuel nozzle body having a curvilinear centerline in an S-formation.
FIG. 10 is a schematic view of an exemplary fuel nozzle suitable for use within the combustion section of FIG. 4, further including a fuel nozzle body having a curvilinear centerline in a pedal-formation with two or more legs.
FIG. 11 is a schematic view of an exemplary fuel nozzle suitable for use within the combustion section of FIG. 4, further including a fuel nozzle body having a curvilinear centerline in a pedal-formation with at least a first leg and a second leg, with the second leg being shorter than the first leg.

### DETAILED DESCRIPTION

Aspects of the disclosure described herein are directed to a turbine engine including a combustion section including a fuel nozzle and a combustion chamber. The fuel nozzle includes a fuel nozzle body. The fuel nozzle body has a centerline and a continuous curvilinear structure bounding an interior. The interior opens to the combustion chamber at an outlet. The continuous curvilinear structure terminates at a distal end and has a curvilinear centerline at the distal end. The curvilinear centerline is shaped to maximize a ratio between the footprint of the fuel nozzle along a wall of the combustion section bounding the combustion chamber and an area of the outlet of the fuel nozzle. Put another way, the curvilinear centerline maximizes the area of the fuel nozzle outlet. Maximizing the area of the fuel nozzle outlet, in turn, reduces a total number of fuel nozzles required for the combustion chamber and reduces a complexity of the fuel nozzle.

The fuel nozzle is especially well adapted for the use of hydrogen fuel (hereinafter, "H2 fuel"). Specifically, the fuel nozzle is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, coke oven gas, diesel, Jet-A, or the like. H2 fuels, when compared to traditional fuels (e.g., carbon fuels, petroleum fuels, etc.), have a higher burn temperature and velocity. Further, flashback can occur when using H2 fuels. As used herein, flashback refers to unintended flame propagation when the H2 fuel is combusted. H2 fuel has higher volatility, meaning that once the H2 fuel is combusted or ignited, the flame generated by the ignition of the H2 fuel can expand in undesired location; in other words, flashback can occur. For example, the flame can expand into the fuel nozzle or igniter. The fuel nozzle, as described herein, ensures flashback of the H2 fuel does not occur. Auto-ignition of the H2 fuel can occur if the H2 fuel is too hot. Auto-ignition of the H2 fuel can be undesirable in certain locations of the combustion section. The fuel nozzle, as described herein, is designed to ensure the H2 fuel does not auto-ignite within the fuel nozzle, and that flashback does not occur.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

For purposes of illustration, the present disclosure will be described with respect to a turbine engine (gas turbine engine). It will be understood, however, that aspects of the disclosure described herein are not so limited and that a fuel nozzle as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" may be used interchangeably to distinguish one component from another and are not intended to signify location or importance of the individual components.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

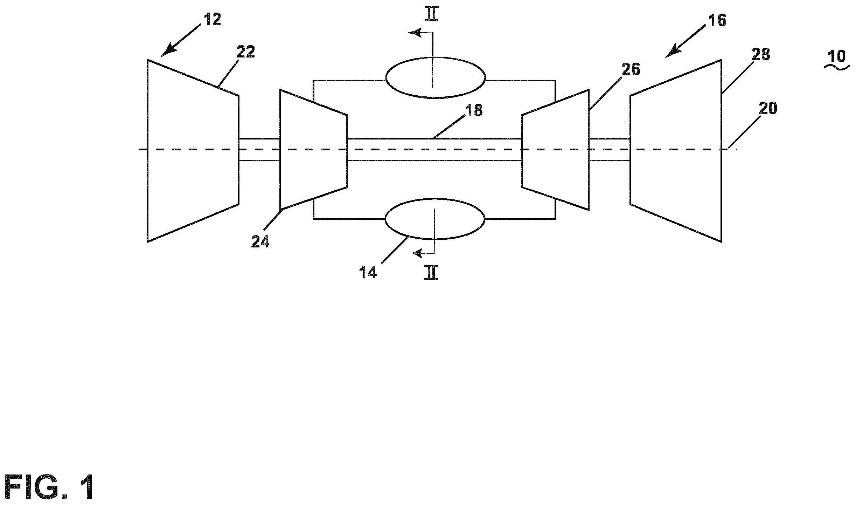

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other, and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Alternatively, the drive shaft 18 can include an LP drive shaft (not illustrated) and an HP drive shaft (not illustrated). The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially spaced rotating blades and a set of circumferentially spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated, that there can be any other number of components within the compression section 12.

Similar to the compression section 12, the turbine section 16 includes a plurality of axially spaced stages, with each stage having a set of circumferentially spaced, rotating blades and a set of circumferentially spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

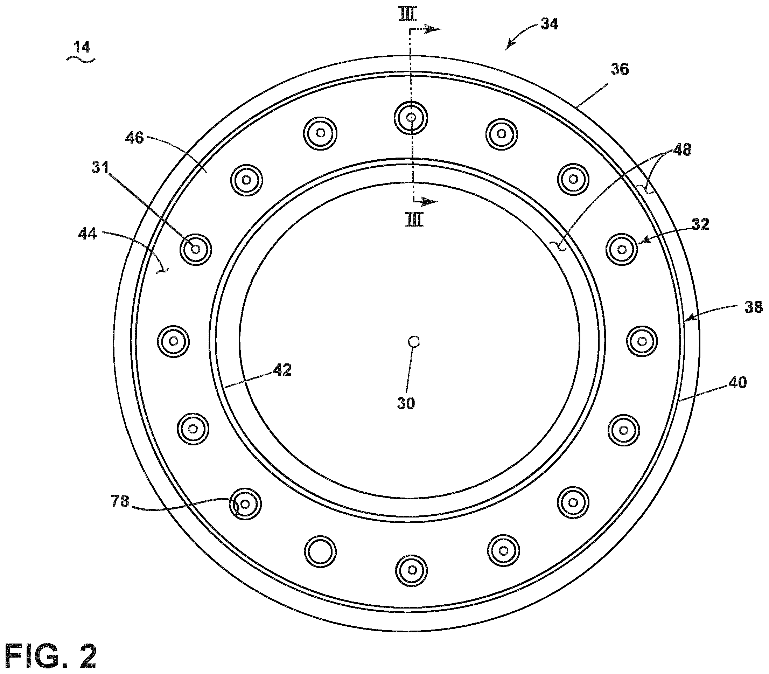

FIG. 2 depicts a cross-sectional view of the combustion section 14 along line II-II of FIG. 1. For purposes of illustration, the drive shaft 18 (FIG. 1) has been removed. The combustion section 14 includes a combustor 34. The combustor 34 includes a dome wall 44 including a set of fuel nozzle openings 78. The combustor 34 includes a set of fuel nozzles 32 extending through the set of fuel nozzle openings 78. The set of fuel nozzles 32 are annularly arranged about a combustor centerline 30. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30. Each fuel nozzle of the set of fuel nozzles 32 includes a fuel nozzle centerline 31. Each fuel nozzle of the set of fuel nozzles 32 includes a fuel nozzle. As used herein, the fuel nozzle is a body including a central channel (not illustrated) that supplies a flow of fuel and/or compressed air to the combustion section 14.

The set of fuel nozzles 32 can include rich cups, lean cups, or a combination of both rich and lean cups annularly provided about the engine centerline. It should be appreciated that the annular arrangement of fuel nozzles can be one or multiple fuel nozzles and one or more of the fuel nozzles can have different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the engine centerline 20. The set of fuel nozzles 32 can be fluidly coupled to the combustion chamber 46. A compressed air passageway 48 can be defined at least in part by both the combustor liner 38 and the casing 36.

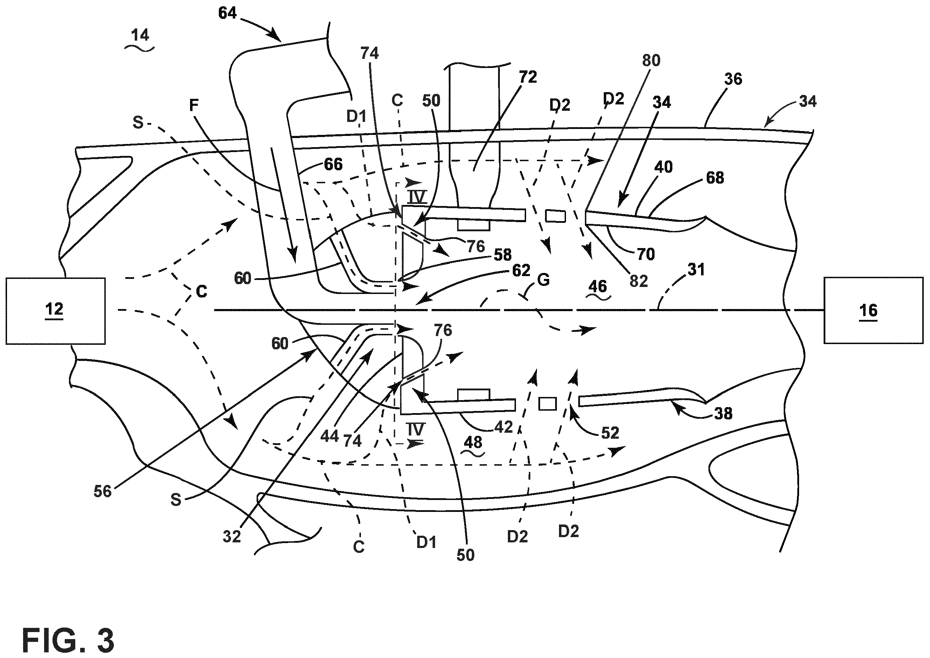

FIG. 3 depicts a cross-section view taken along line III-III of FIG. 2 illustrating the combustion section 14. At least one flame shaping passage can fluidly connect compressed air and the combustion chamber 46. By way of example, the at least one flame shaping passage is illustrated as a first set of flame shaping holes 50 or a second set of flame shaping holes 52. The combustor 34 can include the first set of flame shaping holes 50, the second set of flame shaping holes 52, or both the first set of flame shaping holes 50 and the second set of flame shaping holes 52.

The first set of flame shaping holes 50 pass through the dome wall 44, fluidly coupling compressed air from the compression section 12 or the compressed air passageway 48 to the combustion chamber 46. The second set of flame shaping holes 52 pass through the combustor liner 38, fluidly coupling compressed air from the compressed air passageway 48 to the combustion chamber 46.

Each fuel nozzle of the set of fuel nozzles 32 can be coupled to and disposed within a dome assembly 56. Each fuel nozzle of the set of fuel nozzles 32 can include a flare cone 58 and a swirler 60. The flare cone 58 includes an outlet 62 directly fluidly coupled to the combustion chamber 46. Each fuel nozzle of the set of fuel nozzles 32 is fluidly coupled to a fuel inlet 64 via a passageway 66.

Both the inner combustor liner 42 and the outer combustor liner 40 have an outer surface 68 and an inner surface 70 at least partially defining the combustion chamber 46. The combustor liner 38 can be made of one continuous monolithic portion or multiple monolithic portions assembled together to define the inner combustor liner 42 and the outer combustor liner 40. By way of non-limiting example, the outer surface 68 can define a first piece of the combustor liner 38 while the inner surface 70 can define a second piece of the combustor liner 38 that when assembled together form the combustor liner 38. As described herein, the combustor liner 38 includes the second set of flame shaping holes 52. It is further contemplated that the combustor liner 38 can be any type of combustor liner 38, including but not limited to a single wall or a double walled liner or a tile liner. An ignitor 72 can be provided at the combustor liner 38 and fluidly coupled to the combustion chamber 46, at any location, by way of non-limiting example upstream of the second set of flame shaping holes 52.

During operation, a compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each fuel nozzle of the set of fuel nozzles 32 via the swirler 60 as a swirled airflow (S). A flow of fuel (F) is fed to each fuel nozzle of the set of fuel nozzles 32 via the fuel inlet 64 and the passageway 66. The swirled airflow (S) and the flow of fuel (F) are mixed at the flare cone 58 and fed to the combustion chamber 46 as a fuel/air mixture. The ignitor 72 can ignite the fuel/air mixture to define a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 (FIG. 1) can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at the dome wall 44.

Another portion of the compressed air (C) can flow through the compressed air passageway 48 and can be fed to the second set of flame shaping holes 52 as a second flame shaping airflow (D2). In other words, another portion of the compressed air (C) can flow axially past the dome assembly 56 and enter the combustion chamber 46 by passing through the second set of flame shaping holes 52. That is, compressed air (C) can flow through the combustor liner 38 and into the combustion chamber 46 by passing through the second set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second set of flame shaping holes 52 extending through the dome wall 44 or the combustor liner 38, respectively, direct air into the combustion chamber 46, where the directed air is used to control, shape, cool, or otherwise contribute to the combustion process in the combustion chamber 46.

The combustor 34 shown in FIG. 3 is well suited for the use of a hydrogen-containing gas as the fuel because it helps contain the faster moving flame front associated with hydrogen fuel, as compared to traditional hydrocarbon fuels. However, the combustor 34 can be used with traditional hydrocarbon fuels.

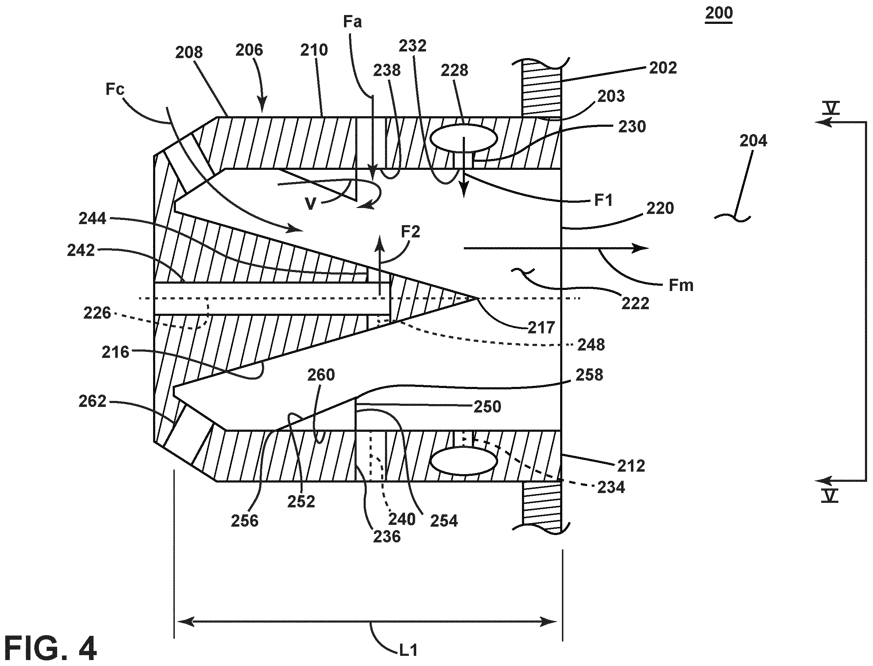

FIG. 4 is a schematic side cross-sectional view of a portion of a combustion section 200 suitable for use as the combustion section 14 of FIG. 2. The combustion section 200 is similar to the combustion section 14; therefore, like parts will be identified with like names, with it being understood that the description of the combustion section 14 applies to the combustion section 200 unless noted otherwise.

The combustion section 200 includes a wall 202 at least partially defining a combustion chamber 204. The combustion section 200 includes a fuel nozzle 206. The wall 202 includes a fuel nozzle opening 203 that the fuel nozzle 206 extends through . The wall 202 can be any wall including the fuel nozzle opening 203 that the fuel nozzle 206 extends through. As a non-limiting example, the wall 202 can be at least one of the dome wall 44 of FIG. 3, the combustor liner 38 of FIG. 3, or a combination thereof.

The fuel nozzle 206 includes a fuel nozzle body 208. The fuel nozzle body 208 includes a continuous curvilinear structure 210 that defines an interior 222. The continuous curvilinear structure 210 extends through at least a portion of the wall 202. The continuous curvilinear structure 210 terminates at a distal end 212. The fuel nozzle body 208 includes a centerline 226. The interior 222 exhausts into the combustion chamber 204 at an outlet 220. The fuel nozzle 206 includes a set of fuel injection channels 230 and a set of air channels 236. The fuel nozzle 206 includes a set of vortex generators 250 provided along the fuel nozzle body 208 and extending into the interior 222.

The interior 222 extends a first length (L1) axially with respect to the centerline 226. The first length (L1) is the axial distance between a farthest downstream portion of the interior 222 (e.g., the outlet 220) and a furthest upstream portion of the interior 222. The first length (L1) is any suitable non-zero length.

The interior 222 extends between a compressed air inlet 262 and the outlet 220. The compressed air inlet 262 can be formed as a series of channels, a continuous channel, a series of holes, or a combination thereof extending through the fuel nozzle body 208. The outlet 220 is any suitable size or shape. As a non-limiting example, the outlet 220 can be a circle, a rectangle, an ellipse, a triangle, or any suitable shape when viewed along a plane perpendicular the centerline 226 and intersecting the outlet 220.

The set of air channels 236 are at least partially formed within the fuel nozzle body 208. The set of air channels 236 include a set of air injection orifices 238 opening to the interior 222. The set of air channels 236 include any number of one or more channels, holes, slots, or a combination thereof circumferentially spaced along the fuel nozzle body 208. While described in terms of having set of air channels 236, it will be appreciated that the fuel nozzle 206 can be formed without the set of air channels 236.

Each air channel of the set of air channels 236 includes an air channel centerline 240 that is perpendicular to or non-perpendicular to the centerline 226. As a non-limiting example, the air channel centerline 240 at a respective air injection orifice of the set of air injections orifices 238, as illustrated, is perpendicular to the centerline 226.

The set of fuel injection channels 230 are at least partially formed within the fuel nozzle body 208. The set of fuel injection channels 230 open to the interior 222 at a set of fuel injection orifices 232. The set of fuel injection orifices 232 can include any number of one or more channels, holes, slots, or a combination thereof circumferentially spaced along the fuel nozzle body 208, with respect to the centerline 226. The set of fuel injection orifices 232 are at least one of provided axially upstream of, axially downstream of, axially aligned with, or a combination thereof, the set of air injection orifices 238.

Each fuel injection channel of the set of fuel injection channels 230 includes a fuel channel centerline 234 that is perpendicular to or non-perpendicular to the centerline 226. As a non-limiting example, the fuel channel centerline 234 at a respective fuel injection orifice of the set of fuel injections orifices 232, as illustrated, is perpendicular to the centerline 226. As a non-limiting example, the one or more fuel channel centerline 234 is parallel to or non-parallel to the one or more air channel centerline 240.

A fuel manifold 228 can be provided within the fuel nozzle body 208. The set of fuel injection channels 230 extend between the fuel manifold 228 and the set of fuel injection orifices 232.

The fuel nozzle 206 can include a centerbody 216 extending through a portion of the interior 222. The centerbody 216 can include a central fuel channel 242 exhausting into the interior 222 at a fuel jet 244. The centerbody 216 can include a set of fuel jets 244 provided along any suitable portion of the centerbody 216. As a non-limiting example, the centerbody 216 can include a plurality of fuel jets circumferentially spaced along the centerbody 216, with respect to the centerline 226. Each fuel jet of the set of fuel jets 244 can be axially aligned with, offset, or a combination thereof from the set of fuel injection orifices 232. The centerbody 216 has any suitable shape. As a non-limiting example, the centerbody 216 can have a triangular cross-sectional area converging to a tip 217 when viewed along a plane extending along the centerline 226 and intersecting the centerbody 216.

The centerbody 216 is integrally formed with or coupled to (e.g., through welding, adhesion, bonding, fastening, or the like) the fuel nozzle body 208. While described in terms of having the centerbody 216, it will be appreciated that the fuel nozzle 206 can be formed without the centerbody 216. As a non-limiting example, the fuel nozzle 206 can be formed without the centerbody 216 such that the set of fuel injection channels 230 can be the only source of fuel injection within the fuel nozzle 206.

Each vortex generator of the set of vortex generators 250 includes a leading edge 252, a trailing edge 254, a root 260, an apex 258 and a foot 256. The root 260 extends along the fuel nozzle body 208. The foot 256 is defined as where the root 260 meets the leading edge 252, or otherwise as where the leading edge 252 meets the fuel nozzle body 208. As a non-limiting example, the foot 256 can be defined as a portion of the vortex generator that is provided radially farthest from the centerline 226. The foot 256 can be a singular point, multiple points, or an edge of the vortex generator. The apex 258 is defined as where the trailing edge 254 meets the leading edge 252, or otherwise as a radially farthest portion of the trailing edge 254 from the fuel nozzle body 208. As a non-limiting example, the apex 258 can be defined as a portion of the vortex generator radially closest to the centerline 226.

Each vortex generator of the set of vortex generators 250 is integrally formed with or coupled to (e.g., through welding, adhesion, bonding, fastening, or the like) the fuel nozzle body 208. As a non-limiting example, each vortex generator of the set of vortex generators 250 can be integrally formed with the fuel nozzle body 208 such that the root 260 is defined as a transition from the fuel nozzle body 208 and to the vortex generator 250 rather than a wall or a surface of the vortex generator.

The set of vortex generators 250 include any number of one or more vortex generators circumferentially spaced along the fuel nozzle body 208 with respect to the centerline 226.

Each vortex generator of the set of vortex generators 250 includes a respective cross-sectional area when viewed along a plane extending along the centerline 226 and intersecting the apex 258. The cross-sectional area of each vortex generator of the set of vortex generators 250 includes any suitable shape such as, but not limited to, a triangle, a semi-circle, a semi-ellipse, a rectangle, a trapezoid, or the like. The set of vortex generators 250 are any suitable vortex generator. As a non-limiting example, the set of vortex generators 250 are at least one of a delta wing vortex generator, a counter-rotating vortex generator, a double-sided wedge, a wheeler vortex generator, a wing vortex generator, a winglet vortex generator, a Kuethe vortex generator, a wishbone vortex generator, a hairpin vortex generator, a lobed vortex generator, a wave-type vortex generator, or any combination thereof.

The set of fuel injection orifices 232 and the set of air injection orifices 238 are provided axially downstream of the set of vortex generators 250. The set of air injection orifices 238 can be provided axially between the set of vortex generators 250 and the set of fuel injection orifices 232. The set of fuel injection orifices 232 and the set of air injection orifices 238 are at least one of circumferentially aligned with, circumferentially offset from, or a combination thereof from the set of vortex generators 250. At least a portion of the set of air channels 236, the set of air injection orifices 238, the set of fuel injection channels 230, the set of fuel injection orifices 232, or a combination thereof can be formed along or within at least a portion of the set of vortex generators 250.

The fuel nozzle body 208 includes any suitable cross-sectional area when viewed along a plane extending along the centerline 226. As a non-limiting example, the fuel nozzle body 208 can converge radially inward from an upstream portion to a downstream portion of the fuel nozzle body 208. As such, the interior 222 can converge radially inwardly from an upstream portion and to a downstream portion. The fuel nozzle 206 can include any suitable construction. As a non-limiting example, the fuel nozzle 206 can be symmetric or asymmetric about the centerline 226.

During operation, at least one flow of air, specifically compressed air, is fed to the fuel nozzle 206 from a compressed air supply. The compressed air supply can be, but is not limited to, the LP compressor 22, the HP compressor 24, or a combination thereof of FIG. 2. The at least one flow of air is fed to the fuel nozzle 206 as at least one of a primary flow of compressed air (Fc) or a secondary flow of air (Fa).

The primary flow of compressed air (Fc) is fed to the fuel nozzle 206 through the compressed air inlet 262. At least a portion of the primary flow of compressed air (Fc) flows over the set of vortex generators 250 to define a set of vortices (V) within the interior 222. For purposes of illustration, only a single vortex of the set of vortices (V) is illustrated, however, it will be appreciated that any vortex generator of the set of vortex generators 250 that has a flow of fluid flow over the respective vortex generator will generate a respective vortex of the set of vortices (V).

The secondary flow of air (Fa) is fed to the interior 222 through the set of air channels 236. The secondary flow of air (Fa) is emitted into the interior 222 at a cross angle relative to the interior 222. In other words, the secondary flow of air (Fa) is emitted into the interior 222 at an angle that is non-parallel to the centerline 226.

A primary flow of fuel (F1) is fed to the interior 222 through the set of fuel injection channels 230. For purposes of illustration, the primary flow of fuel (F1) is shown only as being provided within one of the fuel channels of the set of fuel injection channels 230. However, it will be appreciated that any number of one or more fuel channels of the set of fuel injection channels 230 can include a respective primary flow of fuel (F1). A secondary flow of fuel (F2) can be fed through the central fuel channel 242 and to the interior 222.

At least one of the primary flow of fuel (F1), the secondary flow of fuel (F2), or a combination thereof, mixes with at least one of the primary flow of compressed air (Fc) within the set of vortices (V), the secondary flow of air (Fa), or a combination thereof to define a mixture of fuel and air (Fm). The mixture of fuel and air (Fm) is fed to the combustion chamber 204. The mixture of fuel and air (Fm) can be subsequently ignited to define a flame provided within the combustion chamber 204.

The set of vortices (V) are used to mix the primary flow of compressed air (Fc) with at least the primary flow of fuel (F1). As a non-limiting example, the primary flow of fuel (F1) is fed directly into the set of vortices (V), such that the primary flow of fuel (F1) follows a path of the set of vortices (V) within the interior 222. The injection of the primary flow of fuel (F1) into the set of vortices (V) creates a homogenous mixture of fuel and compressed air. Put another way, the set of vortices (V) are used to evenly distribute at least the primary flow of fuel (F1) such that mixture of fuel and air (Fm) is defined by a homogenous mixture.

It will be appreciated that at least a portion of the vortex generators of the set of vortex generators 250 can be circumferentially angled within the interior 222. Put another way, at least a portion of the vortex generators of the set of vortex generators 250 can be oriented such that the primary flow of compressed air (Fc) is directed into a circumferential direction, with respect to the centerline 226, when the primary flow of compressed air (Fc) flows over the set of vortex generators 250. This direction of the primary flow of compressed air (Fc), in turn, causes the primary flow of compressed air (Fc) to be swirled. The amount of swirl to the flow of fluid that flows over or through the set of vortex generators 250 is quantified by a swirl number defined as an integral of the tangential momentum to the axial momentum of the flow of fluid downstream of a respective vortex generator. The set of vortex generators 250 create a swirled air flow having swirl number of greater than 0 and less than or equal to 2.0.

At least a portion of the set of fuel injection channels 230, the set of air channels 236, or a combination thereof can be circumferentially oriented to provide for a swirling effect within the interior 222. As a non-limiting example, at least a portion of the secondary flow of air (Fa) within the interior 222 can be defined as a circumferential secondary flow of air (Fa) that is exhausted into the interior 222 in a circumferential direction, thus providing for a swirling effect within the interior 222. As a non-limiting example, at least a portion of the primary flow of fuel (F1) within the interior 222 can be defined as a circumferential primary flow of fuel (F1) that is exhausted into the interior 222 in a circumferential direction, thus providing for a swirling effect within the interior 222. The amount of swirl to the primary flow of fuel (F1) and the secondary flow of air (Fa) is quantified by a swirl number defined as an integral of the tangential momentum to the axial momentum of the flow of fluid downstream of a respective fuel injection channel of the set of fuel injection channels 230, or a respective air channel of the set of air channels 236, respectively. The set of fuel injection channels 230 and the set of air channels 236 create a swirled air flow having swirl number of greater than 0 and less than or equal to 2.0.

The secondary flow of fuel (F2) and the primary flow of fuel (F1) can each include a respective H2 fuel, or mixture of fuel and another fluid. As a non-limiting example, the secondary flow of fuel (F2), the primary flow of fuel (F1), or a combination thereof can include an H2 fuel mixed with at least one of steam, water, another fuel (e.g., Jet-A, diesel, natural gas, coke oven gas, etc.), or a combination thereof. It is contemplated that the fuel within the secondary flow of fuel (F2) can be the same or different fuel as the fuel within the primary flow of fuel (F1). As a non-limiting example, the primary flow of fuel (F1) and the secondary flow of fuel (F2) can each include an H2 fuel. As a non-limiting example, the primary flow of fuel (F1) can include the H2 fuel, while the secondary flow of fuel (F2) can include a flow of liquid fuel. As a non-limiting example, at least one of the primary flow of fuel (F1), the secondary flow of fuel (F2) or a combination thereof can include (e.g., be a combination with or be made entirely of), but are not limited to, H2 fuel, natural gas, diesel, Jet-A, ammonia, water, air, or the like. It is contemplated that at least one of the primary flow of fuel (F1), the secondary flow of fuel (F2), or a combination thereof can include a flow of 100% H2 fuel, or a mixture of H2 fuel and compressed air or another fuel (e.g., methane).

The use of the set of vortex generators 250, along with the location of the set of fuel injection orifices 232, is especially important when utilizing H2 fuel. Specifically, the use of the set of vortex generators 250 ensures that the H2 fuel from, for example, the primary flow of fuel (F1), is fully mixed with the primary flow of compressed air (Fc). This, in turn, ensures the homogenous mixture of the mixture of fuel and air (Fm). The homogenous mixture is especially important when utilizing H2 fuel as an uneven distribution of H2 fuel will produce larger NOₓ emissions when ignited when compared to the homogenous mixture. As such, the fuel nozzle 206 is especially adapted for use with H2 fuels as the fuel nozzle 206 ensures that the mixture of fuel and air (Fm) is a homogenous mixture.

While not illustrated, the combustion section 200 can include a controller module communicatively coupled to a set of valves in order to automatically control a flow of fluids to or within respective portions of the combustion section 200. As a non-limiting example, the controller module can automatically control a supply of the primary flow of compressed air (Fc), the primary flow of fuel (F1), the secondary flow of fuel (F2), the secondary flow of air (Fa), or a combination thereof, to the fuel nozzle 206. The flow of fluids to or within respective portions of the combustion section 200 can be done independently of one another. As a non-limiting example, the supply of the primary flow of fuel (F1) to the set of fuel injection orifices 232 can be independent of the supply of the secondary flow of fuel (F2) to the set of fuel jets 244.

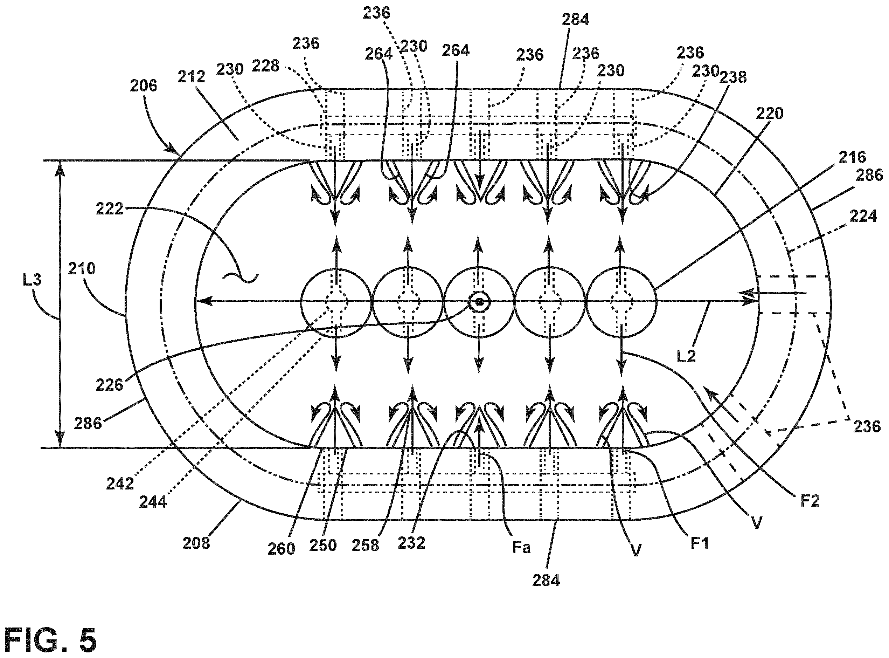

FIG. 5 is a schematic cross-section view of the fuel nozzle 206 as seen from sight line V-V of FIG. 4. The fuel nozzle 206 is removed from the wall 202 (FIG. 2) for purposes of illustration.

The fuel manifold 228 extends circumferentially within the fuel nozzle body 208, with respect to the centerline 226. The fuel manifold 228 extends continuously or non-continuously about an entirety of or less than entirety of a circumferential extent of the centerline 226.

At least a portion of the continuous curvilinear structure 210 extends continuously about an entirety of the centerline 226. Specifically, the distal end 212 extends continuously about the entirety of the centerline 226. The continuous curvilinear structure 210 extends continuously about the entirety of the centerline 226 to form any suitable formation of shape at the distal end 212. As a non-limiting example, the continuous curvilinear structure 210 forms a racetrack shape having opposing non-curved sections 284 and opposing curved sections 286 that interconnect the opposing non-curved sections 284.

The racetrack is defined by a major axis, or a second length (L2), and a minor axis, or a third length (L3). A ratio between a larger of the second length (L2) and the third length (L3), and the first length (L1) of FIG. 3 is used to define the area of the outlet 220 in comparison to the size (e.g., the first length (L1) of the fuel nozzle 206. As a non-limiting example, the second length (L2) is greater than or equal to 1 times the first length (L1) and less than or equal to 1500 times the first length (L1).

It will be appreciated that the continuous curvilinear structure 210 defines the shape of the outlet 220. Specifically, a shape of the fuel nozzle body 208 at the distal end 212 defines the overall shape of the outlet 220. The outlet 220 extends continuously between opposing ends of the continuous curvilinear structure 210. As the continuous curvilinear structure 210 includes a curvilinear centerline 224 with a racetrack shape, the outlet 220 is also defined by a racetrack or elliptical shape.

The fuel nozzle 206 includes any number of one or more centerbodies 216. As illustrated the fuel nozzle 206 includes five centerbodies 216 spaced from one another. The centerbodies 216 can have any suitable shape or combination of shapes. As a non-limiting example, at least one centerbody 216 can include a circular cross-sectional area when viewed along a plane perpendicular to the centerline 226 and intersecting the at least one centerbody 216. As a non-limiting example, at least one centerbody 216 can include a conical shape. It will be appreciated that the centerbody 216 can include any suitable shape. As illustrated, each centerbody 216 includes a respective central fuel channel 242 and set of fuel jets 244. It will be appreciated that any number of one or more centerbodies 216, however, can be formed without the central fuel channel 242 and set of fuel jets 244.

The set of vortex generators 250 are axially spaced along the continuous curvilinear structure 210, with respect to the curvilinear centerline 224. The set of vortex generators 250 are provided along any suitable portion of the continuous curvilinear structure 210. As a non-limiting example, the set of vortex generators 250 are provided only along the opposing non-curved sections 284 of the continuous curvilinear structure 210. As a non-limiting example, the set of vortex generators 250 can be excluded from the opposing curved sections 286.

The set of fuel injections channels 230 are circumferentially aligned with the set of vortex generators 250. The set of fuel injection channels 230 are axially spaced, with respect to the curvilinear centerline 224, along the continuous curvilinear structure 210. The set of fuel injection channels 230 are axially aligned, with respect to the curvilinear centerline 224, with the set of vortex generators 250. Alternatively, one or more fuel injection channel of the set of fuel injection channels 230 can be axially offset from the set of vortex generators 250, with respect to the curvilinear centerline 224. The set of fuel injection channels 230 extend through and is provided along at least one of the opposing non-curved sections 284, the opposing curved sections 286, or a combination thereof.

It will be appreciated that each vortex generator of the set of vortex generators 250 can be axially aligned with at least one fuel injection orifice of the set of fuel injection orifices 232, with respect to the curvilinear centerline 224. It will be appreciated that the set of fuel injection office 232 can be axially aligned with the trailing edge 254 of a respective vortex generator of the set of vortex generators 250, with respect to the curvilinear centerline 224. It will be appreciated that at least a portion of the set of air injection orifices 238 can be axially aligned with the set of vortex generators 250, with respect to the curvilinear centerline 224.

At least a portion of the set of air channels 236 are circumferentially aligned with the set of vortex generators 250. As a non-limiting example, each vortex generator of the set of vortex generators 250 includes a respective air channel of the set of air channels 236 that is circumferentially aligned with the vortex generator. The set of air channels 236 can optionally include at least one air channel that is not circumferentially aligned with the set of vortex generators 250. As a non-limiting example, at least one air channel of the set of air channels 236 can be provided along the opposing curved section 286, not aligned with a respective vortex generator of the set of vortex generators 250. The set of air channels 236 are axially spaced, with respect to the curvilinear centerline 224, along the continuous curvilinear structure 210. At least a portion of the set of air channels 236 are axially aligned with the set of vortex generators 250, with respect to the curvilinear centerline 224.

During operation, each vortex generator of the set of vortex generators 250 generates at least one vortex of the set of vortices (V). The number of vortices that that each vortex generator of the set of vortex generators 250 generates is dependent on the construction of the vortex generator. As a non-limiting example, the vortex generator being formed as a delta wing vortex generator will produce two vortices on opposing sides of the vortex generator. As a non-limiting example, the vortex generator being formed as a half-delta wing vortex generator will produce a single vortex. A vortex generator that produces a single vortex is referred to as a singlet vortex generator, while a vortex generator that produces two vortices is referred to as a doublet vortex generator. The set of vortex generators 250 include at least one of the single vortex generator, the doublet vortex generator, or a combination thereof.

As illustrated, the set of vortex generators 250 are doublet vortex generators. Put another way, each vortex generator of the set of vortex generators 250 includes opposing vortices of the set of vortices (V) on either side of the respective vortex generator. The set of fuel injection channels 230 are oriented such that the primary flow of fuel (F1) is exhausted directly into the pair of vortices. The set of air channels 236 exhaust the secondary flow of air (Fa) downstream of, but circumferentially aligned with, the set of vortex generators 250.

With reference to both FIGs. 4 and 5, it will be appreciated that the set of vortices (V) are produced downstream of the trailing edge 254. Specifically, as the primary flow of compressed air (Fc) flows over a respective vortex generator of the set of vortex generators 250, a low-pressure zone is created downstream of the respective vortex generator. This low-pressure zone causes the primary flow of compressed air (Fc) to turn, thus generating the set of vortices (V).

During operation, the set of vortices (V) slow down the primary flow of compressed air (Fc). In other words, the primary flow of compressed air (Fc) is slower where the set of vortices (V) are present in comparison to regions where the set of vortices (V) are not present. The areas without the set of vortices (V) can be defined as negative areas as there are no vortex generators of the set of vortex generators 250 provided there. These negative areas are defined as portions of the interior 222 with an increased velocity. In other words, there is a disparity in a velocity of the flow of fluid within the negative areas in comparison with the flow of fluid circumferentially aligned with and axially downstream of the set of vortex generators 250.

It is contemplated that allowing the disparity between the velocities due to the negative areas negatively impacts the function of the fuel nozzle 206. For example, if left unchecked, the disparity between the velocities creates shear layers of fluid within the mixture of fuel and air (Fm). These shear layers of fluid break up the homogenous mixture of fuel and air in the mixture of fuel and air (Fm). Further, the disparity between the velocities causes some of the fuel within the mixture of fuel and air (Fm) to stay back or recirculate axially away from the fuel nozzle outlet (FIG. 4). The recirculation of the fuel, in turn, increases the likelihood for flashback to occur within the fuel nozzle 206. In other words, the disparity between the velocities can cause ignition of fuel within the fuel nozzle 206 (e.g., flashback). The risk of flashback is higher in cases where the fuel nozzle 206 is utilizing a fuel with a higher flame speed such as H2 fuels.

The fuel nozzle 206, as described herein, includes structure to address the possible disparity between the velocities. As a non-limiting example, at least a portion of the set of air channels 236 can be axially downstream of and circumferentially aligned with the set of vortex generators 250. At least a portion of the secondary flow of air (Fa) is used to speed up portions of the mixture of fuel and air (Fm) that is directly downstream of the set of vortex generators 250 such that there is no disparity between or a minimal disparity between the velocities. As a non-limiting example, a total number of vortex generators of the set of vortex generators 250 can be increased to minimize the size of an area between axially opposing vortex generators 250, with respect to the curvilinear centerline 224 This, in turn, reduces the total size of the negative area, thus reducing the disparity between the velocities as less of the mixture of fuel and air (Fm) is moving faster than the mixture of fuel and air (Fm) directly downstream of the set of vortex generators 250.

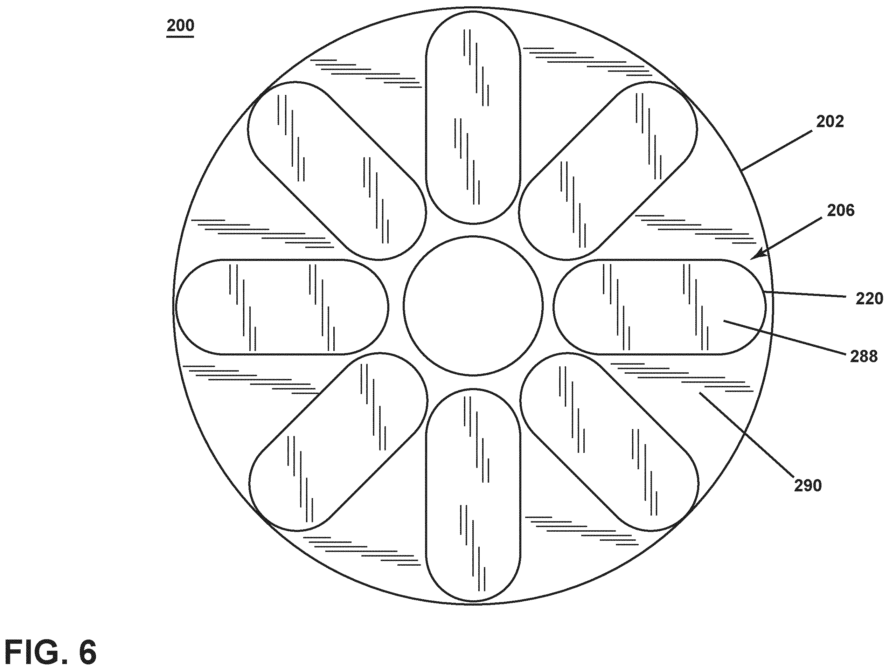

FIG. 6 is a schematic view of the combustion section 200 as seen from sight line V-V of FIG. 4. The combustion section 200 includes a set of fuel nozzles 206 provided along the wall 202. There are any number of one or more fuel nozzles in the set of fuel nozzles 206.

As illustrated, each fuel nozzle of the plurality of fuel nozzles 206 is identical. It will be appreciated, however, that at least two fuel nozzles of the plurality of fuel nozzles 206 can be non-identical. As a non-limiting example, a first fuel nozzle of the plurality of fuel nozzles 206 can include a continuous curvilinear structure 210 (FIG. 4) with a first shape at the respective distal end 212, while a second fuel nozzle of the plurality of fuel nozzles 206 can include a continuous curvilinear structure 210 with a second shape, different from the first shape, at the respective distal end 212 (FIG. 4).

The fuel nozzles 206 each include a respective outlet area 288 opening to the combustion chamber 204 of FIG. 4. The wall 202 includes a bluff area 290 confronting to combustion chamber 204. The bluff area 290 includes the exposed surface area of the wall 202 along with the solid area of each fuel nozzle 206 that confronts the combustion chamber 204 (e.g.., the distal end 212 of FIG. 4). A summation of the outlet area 288 is greater than or equal to 10% and less than or equal to 400% of the bluff area 290.

During operation, the bluff area 290 is used to anchor a flame that is generated via the combustion of the mixture of fuel and air (Fm) of FIG. 4. A sizing of the bluff area 290 with respect to the outlet area 288 ensures that the flame is adequately anchored to the wall 202. If the bluff area 290 is too small there is an insufficient recirculation area (e.g., area for the mixture of fuel and air (Fm) to anchor to the wall 202) resulting in instabilities within the combustion section 200. Conversely, if the bluff area 290 is to too large the flame is overly anchored to the wall 202, meaning that the wall 202 will be overly heated by the flame. It is contemplated that providing the summation of the outlet area 288 is greater than or equal to 10% and less than or equal to 400% of the bluff area 290, ensures that the bluff area 290 is sized to avoid instabilities without overly anchoring the flame to the wall 202.

Further, it is contemplated that minimizing the bluff area 290 and maximizing the outlet area 288 (e.g., increasing the ratio) is advantageous for the operation of the combustion section 200. Maximizing the outlet area 288 with respect to the bluff area 290 increases a total available area of the combustion section 200 to inject the mixture of fuel and air (Fm) of FIG. 4 into the combustion chamber 204. Put another way, the larger the outlet area 288, the larger the overall volume of the mixture of fuel and air (Fm) (FIG. 4) that is injected into the combustion chamber 204 (FIG. 4). Increasing the overall volume of the mixture of fuel and air (Fm) that is injected into the combustion chamber 204, in turn, increases the overall power output of the turbine engine (e.g., the turbine engine 10 of FIG. 1) by increasing a total volume of combustion gases that are output from the combustion section 200. Further, a reduction in the bluff area 290 reduces the total area required for the wall 202, thus reducing the overall size of the combustion section 200. A reduction in the overall size of the combustion section 200 reduces the weight of the turbine engine (e.g., the turbine engine 10 of FIG. 1), thus increasing the overall efficiency of the turbine engine including the combustion section 200.

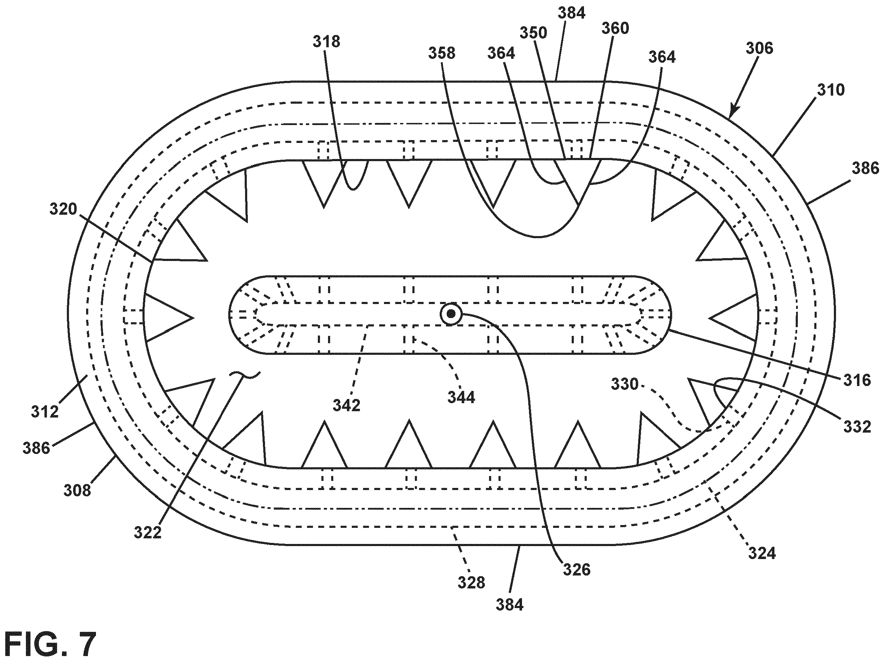

FIG. 7 is a schematic view of an exemplary fuel nozzle 306 suitable for use within the combustion section 200 of FIG. 4. The fuel nozzle 306 is similar to the fuel nozzle 206 (FIG. 4), therefore, like parts will be identified with like numerals increased to the 300 series, with it being understood that the description of the fuel nozzle 206 applies to the fuel nozzle 306 unless noted otherwise.

The fuel nozzle 306 includes a fuel nozzle body 308 having a continuous curvilinear structure 310 terminating at a distal end 312. The continuous curvilinear structure 310 includes a curvilinear centerline 324 at the distal end 312. The fuel nozzle body 308 bounds an interior 322 opening at an outlet 320. The fuel nozzle body 308 defines a centerline 326. The fuel nozzle 306 includes a set of fuel injection channels 330 exhausting into the interior 322 at a set of fuel injection orifices 332. The fuel nozzle 206 can include a fuel manifold 328. The fuel manifold 328 is fluidly coupled to the set of fuel injection channels 330. The fuel manifold 328 extends continuously or non-continuously within the fuel nozzle body 308 between each fuel injection channel of the set of fuel injections channels 330. The fuel nozzle 306 can include a centerbody 316.The centerbody 316 can include a central fuel channel 342 and a set of fuel jets 344 exhausting into the interior 322. The fuel nozzle 306 includes a set of vortex generators 350 axially spaced along the continuous curvilinear structure 310, with respect to the curvilinear centerline 324. Each vortex generator of the set of vortex generators 350 includes a root 360, an apex 358, and opposing side walls 364. While not illustrated, the fuel nozzle 306 can include a set of air channels (e.g., the set of air channels 236 of FIG. 4) formed within the fuel nozzle body 308.

The fuel nozzle 306 is similar to the fuel nozzle 206 in that the curvilinear centerline 324 is any suitable shape such as, but not limited to, a racetrack having opposed non-curved sections 384 and opposing curved sections 386. The fuel nozzle 306, however, includes the set of vortex generators 350 axially spaced along a larger extent of the curvilinear centerline 324 in comparison with the set of vortex generators 250 of FIG. 4. Specifically, the set of vortex generators 350 extend axially along both the opposing non-curved sections 384 and the opposing curved sections 386. It will be appreciated that the set of vortex generators 350 follow the contour of the curvilinear centerline 324. The shape of the outlet 320 is defined by the shape of the curvilinear centerline 324.

The centerbody 316 differs from the centerbody 216 of FIG. 4 in that the fuel nozzle 306 can include a singular centerbody 316. The centerbody 316 can be formed to extend a greater radial length within the interior 322, with respect to the centerline 326, in comparison with the centerbody 216. As a non-limiting example, the centerbody 316 is formed with a racetrack cross-sectional area, like the continuous curvilinear structure 310. The centerbody 316 can include any suitably shaped cross-sectional area. The centerbody 316 and the continuous curvilinear structure 310 can have the same or differing shapes. Put another way, the centerbody 316 can follow a contour defined by a radially opposing portion of the continuous curvilinear structure 310, with respect to the centerline 326.

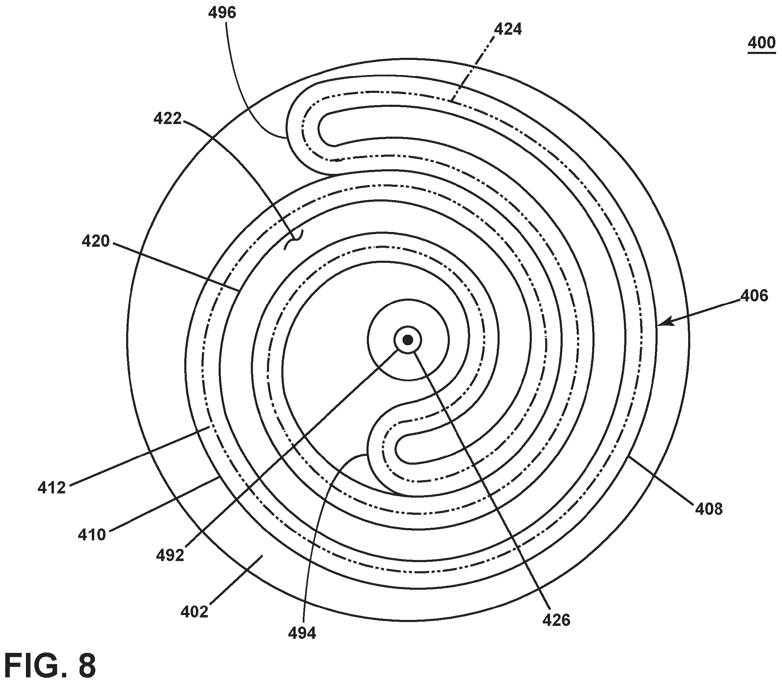

FIG. 8 is a schematic view of an exemplary combustion section 400 suitable for use as the combustion section 200 of FIG. 4. The combustion section 400 is similar to the combustion section 14 (FIG. 1), 200 therefore, like parts will be identified with like numerals increased to the 400 series, with it being understood that the description of the combustion section 14, 200 applies to the combustion section 400 unless noted otherwise.

The combustion section 400 includes a wall 402 and a fuel nozzle 406. The wall 402, as illustrated, is flat with the page. The combustion section 400 includes a combustor centerline 492 (e.g., the combustor centerline 30 of FIG. 2). The fuel nozzle 406 is provided along and extends through the wall 402. The fuel nozzle 406 includes a fuel nozzle body 408 having a continuous curvilinear structure 410. The fuel nozzle body 408 includes a centerline 426. The fuel nozzle body 408 defines an interior 422 opening to an outlet 420. The fuel nozzle body 408 includes a distal end 412. The continuous curvilinear structure 410 includes a curvilinear centerline 424 at the distal end 412. While not illustrated, the fuel nozzle 406 includes a set of vortex generators (e.g., the set of vortex generators 250 (FIG. 4), 350 (FIG. 7)), a set of air channels (e.g., the set of air channels 236 (FIG. 4)), and a set of fuel injections channels (e.g., the set of fuel injections channels 230 (FIG. 4), 330 (FIG. 5)). While not illustrated, the fuel nozzle 406 can include a centerbody (e.g., the centerbody 216 (FIG. 4), 316 (FIG. 7)).

The fuel nozzle 406 is similar to the fuel nozzle 206 (FIG. 4), 306 (FIG. 7), in that the fuel nozzle 406 includes the continuous curvilinear structure 410. The continuous curvilinear structure 410, however, is in a non-linear formation. As a non-limiting example, the non-linear formation is a spiral of the continuous curvilinear structure 410. The continuous curvilinear structure 410 extends between a first circumferential end 494 and a second circumferential end 496. The first circumferential end 494 is greater than 2π radians (e.g., greater than 1 revolution) and less than or equal to 20π radians (e.g., 10 revolutions) from the second circumferential end 496. Due to the formation of the fuel nozzle 406, the centerline 426 is coincident with the combustor centerline 492.

While illustrated as a spiral, it will be appreciated that the continuous curvilinear structure 410 can have any suitable non-linear shape. As a non-limiting example, the continuous curvilinear structure 410 can have series of alternating peaks and valleys forming a zigzag or wave formation along the wall 402. The fuel nozzle 406, like the fuel nozzle 206, 306 maximizes the area of the outlet 420 in relation to an exposed area of the wall 402. It will be appreciated that the set of vortex generators follow the contour of the contour of the curvilinear centerline 424. As such, the set of vortex generators can be arranged within the interior 422 in spiral-formation. The shape of the outlet 420 is defined by the shape of the curvilinear centerline 424. As such, the outlet 420 can have a non-linear (e.g., spiral) shape.

It will be appreciated that the formation of the continuous curvilinear structure 410 (e.g., the shape of the continuous curvilinear structure 410 at the distal end 412) can be based on the shape of the wall 402. As a non-limiting example, if the wall 402 is circular, as illustrated, the continuous curvilinear structure 410 can have a spiral-formation or a donut-formation to maximize the area that the outlet 420 extends. As a non-limiting example, if the wall 402 is a barrel extending around the combustor centerline 492 (e.g., the combustor liner 38 of FIG. 3), the continuous curvilinear structure 410 can include a helical formation wrapping circumferentially about the combustor centerline 492.

It will be appreciated that due to the shape of the continuous curvilinear structure 410 that the fuel nozzle 408 can be the only fuel nozzle within the combustion section 400. Put another way, the continuous curvilinear structure 410 is sized such that multiple fuel nozzles are not required.

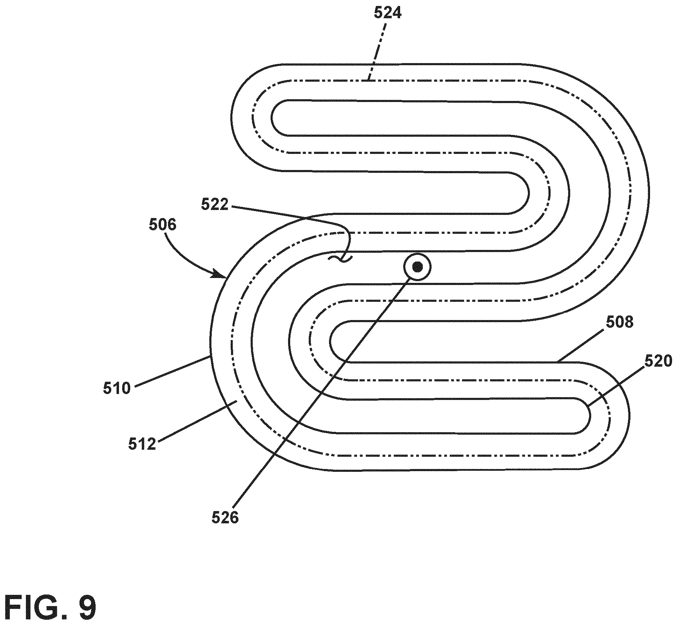

FIG. 9 is a schematic view of an exemplary fuel nozzle 506 suitable for use within the combustion section 200 of FIG. 4. The fuel nozzle 506 is similar to the fuel nozzle 206 (FIG. 4), 306 (FIG. 7), 406 (FIG. 8), therefore, like parts will be identified with like numerals increased to the 500 series, with it being understood that the description of the fuel nozzle 206, 306, 406, applies to the fuel nozzle 506 unless noted otherwise.

The fuel nozzle 506 is provided along and extends through the wall (e.g., the wall 202 (FIG. 4), 402 (FIG. 8)). The fuel nozzle 506 includes a fuel nozzle body 508 having a continuous curvilinear structure 510. The fuel nozzle body 508 defines an interior 522 opening to an outlet 520. The fuel nozzle body 508 includes a centerline 526. The fuel nozzle body 508 includes a distal end 512. The continuous curvilinear structure 510 includes a curvilinear centerline 524 at the distal end 512. While not illustrated, the fuel nozzle 506 includes a set of vortex generators (e.g., the set of vortex generators 250 (FIG. 5), 350 (FIG. 7)), a set of air channels (e.g., the set of air channels 236 (FIG. 5)), and a set of fuel injections channels (e.g., the set of fuel injections channels 230 (FIG. 5), 330 (FIG. 5)). While not illustrated, the fuel nozzle 506 can include a centerbody (e.g., the centerbody 216 (FIG. 5), 316 (FIG. 7)).

The fuel nozzle 506 is similar to the fuel nozzle 206, 306, 406 in that the fuel nozzle 506 includes the continuous curvilinear structure 510. The continuous curvilinear structure 510, however, is in an S-formation. It will be appreciated that the continuous curvilinear structure 510 can take any suitable formation. It will be appreciated that the set of vortex generators follow the contour of the curvilinear centerline 524. As such, the set of vortex generators can be arranged within the interior 522 in S-formation. The shape of the outlet 520 is defined by the shape of the curvilinear centerline 524. As such, the outlet 520 can have an S-formation.

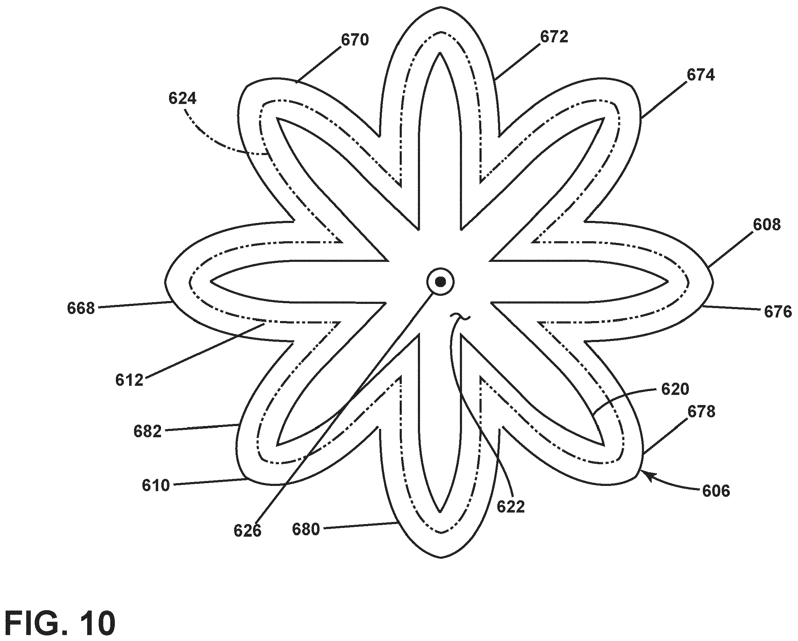

FIG. 10 is a schematic view of an exemplary fuel nozzle 606 suitable for use within the combustion section 200 of FIG. 4. The fuel nozzle 606 is similar to the fuel nozzle 206 (FIG. 4), 306 (FIG. 7), 406 (FIG. 8), 506 (FIG. 9), therefore, like parts will be identified with like numerals increased to the 600 series, with it being understood that the description of the fuel nozzle 206, 306, 406, 506, applies to the fuel nozzle 606 unless noted otherwise.

The fuel nozzle 606 is provided along and extends through the wall (e.g., the wall 202 (FIG. 4), 402 (FIG. 8)). The fuel nozzle 606 includes a fuel nozzle body 608 having a continuous curvilinear structure 610. The fuel nozzle body 608 defines an interior 622 opening to an outlet 620. The fuel nozzle body 608 includes a centerline 626. The fuel nozzle body 608 includes a distal end 612. The continuous curvilinear structure 610 includes a curvilinear centerline 624 at the distal end 612. While not illustrated, the fuel nozzle 606 includes a set of vortex generators (e.g., the set of vortex generators 250 (FIG. 6), 350 (FIG. 7)), a set of air channels (e.g., the set of air channels 236 (FIG. 6)), and a set of fuel injections channels (e.g., the set of fuel injections channels 230 (FIG. 6), 330 (FIG. 6)). While not illustrated, the fuel nozzle 606 can include a centerbody (e.g., the centerbody 216 (FIG. 6), 316 (FIG. 7)).

The fuel nozzle 606 is similar to the fuel nozzle 206, 306, 406, 506 in that the fuel nozzle 606 includes the continuous curvilinear structure 610. The continuous curvilinear structure 610, however, is in a star or spoke formation including a set of legs. The set of legs are circumferentially spaced about the centerline 626. The set of legs can include any number of two or more legs. As a non-limiting example, the set of legs can include a first leg 668, a second leg 670, a third leg 672, a fourth leg 674, a fifth leg 676, a sixth leg 678, a seventh leg 680, and an eight leg 682. Each leg of the set of legs can be the same. Put another way, an area of the outlet 620 defined by a respective leg is equal between each leg of the set of legs. The set of legs are symmetric or asymmetric about a plane extending along the centerline 626 and intersecting the distal end 612. As a non-limiting example, the fuel nozzle 606 is symmetric about any plane extending along the centerline 626 and intersecting the distal end 612. It will be appreciated that the set of vortex generators follow the contour of the contour of the curvilinear centerline 624. As such, the set of vortex generators can be arranged within the interior 622 in a star or spoke formation. The shape of the outlet 620 is defined by the shape of the curvilinear centerline 624. As such, the outlet 620 can have a star or spoke formation.

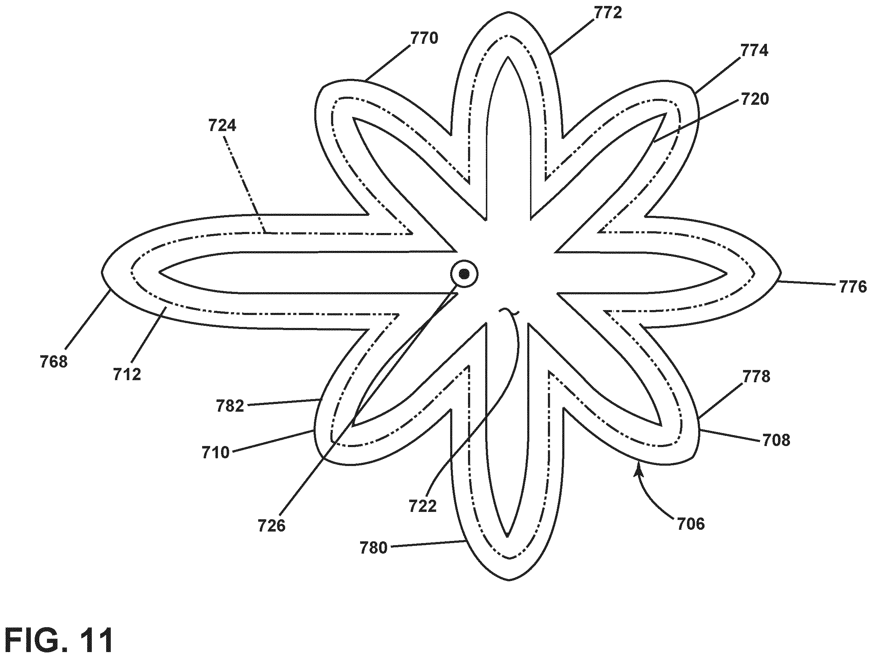

FIG. 11 is a schematic view of an exemplary fuel nozzle 706 suitable for use within the combustion section 200 of FIG. 4. The fuel nozzle 706 is similar to the fuel nozzle 206 (FIG. 4), 306 (FIG. 7), 406 (FIG. 8), 506 (FIG. 9), 606 (FIG. 10), therefore, like parts will be identified with like numerals increased to the 700 series, with it being understood that the description of the fuel nozzle 206, 306, 406, 506, 606, applies to the fuel nozzle 706 unless noted otherwise.

The fuel nozzle 706 is provided along and extends through the wall (e.g., the wall 202 (FIG. 4), 402 (FIG. 8)). The fuel nozzle 706 includes a fuel nozzle body 708 having a continuous curvilinear structure 710. The fuel nozzle body 708 defines an interior 722 opening to an outlet 720. The fuel nozzle body 708 includes a centerline 726. The fuel nozzle body 708 includes a distal end 712. The continuous curvilinear structure 710 includes a curvilinear centerline 724 at the distal end 712. While not illustrated, the fuel nozzle 706 includes a set of vortex generators (e.g., the set of vortex generators 250 (FIG. 7), 350 (FIG. 7)), a set of air channels (e.g., the set of air channels 236 (FIG. 7)), and a set of fuel injections channels (e.g., the set of fuel injections channels 230 (FIG. 7), 330 (FIG. 7)). While not illustrated, the fuel nozzle 706 can include a centerbody (e.g., the centerbody 216 (FIG. 7), 316 (FIG. 7)).

The fuel nozzle 706 is similar to the fuel nozzle 606 in that the fuel nozzle 706 includes the continuous curvilinear structure 710 including a set of legs. The set of legs are circumferentially spaced about the centerline 726. The set of legs can include any number of two or more legs. As a non-limiting example, the set of legs can include a first leg 768, a second leg 770, a third leg 772, a fourth leg 774, a fifth leg 776, a sixth leg 778, a seventh leg 780, and an eighth leg 782. However, at least two legs of the set of legs are non-equal. Put another way, an area of the outlet 720 defined by a respective leg is non-equal to an area of the outlet 720 defined by another leg of the set of legs. As a non-limiting example, the first leg 768 is larger than each of the second leg 770, the third leg 772, the fourth leg 774, the fifth leg 776, the sixth leg 778, the seventh leg 780, and the eighth leg 782. It will be appreciated that the set of vortex generators follow the contour of the curvilinear centerline 724. As such, the set of vortex generators can be arranged within the interior 722 in a star or spoke formation. The shape of the outlet 720 is defined by the shape of the curvilinear centerline 724. As such, the outlet 720 can have a star or spoke formation.

Benefits of the present disclosure include a combustor suitable for use with a H2 fuel. As outlined previously, H2 fuels have a higher flame temperature, likelihood for flashback and likelihood for auto-ignition than traditional fuels (e.g., fuels not containing hydrogen). That is, H2 fuels have a wider flammable range and a faster burning velocity than traditional fuels such petroleum-based fuels, or petroleum and synthetic fuel blends. Additional structure to mitigate flashback and stop undesired auto-ignition is needed; problems not faced by combustors utilizing traditional fuels. The combustion section, as described herein, includes a fuel nozzle that effectively mixes the H2 fuel with the flow of compressed air, and further eliminates the negative areas associate with the use of the set of vortices. This, in turn, results in a mixture of fuel and air that is a homogenous mixture. The homogenous mixture, in turn, reduces the possibility of flashback and autoignition within the fuel nozzle. Further, the fuel nozzle is designed to ensure that the mixture is moving at an adequate velocity when fed to the combustion chamber to avoid flashback. A leaner mixture (less fuel within the mixture), or a richer mixture (more fuel within the mixture) result in lower flame speeds. The lower the flame speed, the higher chance a flashback will occur. Further, if the mixture is too rich or too lean and not adequately mixed, the mixture of fuel and air will include pocket of fuel that further increases likelihood of flashback occurring, Providing a fuel nozzle that produces the homogenous mixture reduces the likelihood of flashback, thus increasing the lifespan and durability of the fuel nozzle.

Further the use of the set of vortex generators, as opposed to a conventional fuel nozzle that does not include the set of vortex generators, has been found to reduce NOₓ emissions from the combustion section. As discussed herein, the set of vortex generators create vortices within the combustion chamber that entrap or otherwise capture the flow of H2 fuel that is being output into the combustion chamber. The entrapment of the flow of H2 fuel, through the set of vortices, in turn helps with ensuring that the H2 fuel and the flow of compressed air are adequately mixed. Further, the use of the vortices helps break up the flow of fuel, which allows for the length between the fuel nozzle outlet and a location where the primary flow of fuel is injected to be reduced. Put another way, the vortices mix the fuel within the compressed air fast enough to reduce the total space needed to create the homogenous mixture. Reducing the length between the fuel nozzle outlet and the location where the primary flow of fuel is injected, reduces the potential area for flashback or autoignition to occur. Put another way, the longer of a distance that the fuel and the compressed air need to mix, the larger the area is for autoignition or flashback to occur within the fuel nozzle. Further, the more homogenous mixture of compressed air and gaseous fuel, in turn, reduces the overall NOx emissions of the combustion section once the mixture of compressed air and gaseous fuel is ignited.

Benefits associated with using hydrogen-containing fuel over traditional fuels include an eco-friendlier engine as the hydrogen-containing fuel, when combusted, generates less carbon pollutants than a combustor using traditional fuels. For example, a combustor including 100% hydrogen-containing fuel (e.g., the fuel is 100% H₂) would have zero carbon pollutants. The combustor, as described herein, can be used in instances where 100% hydrogen-containing fuel is used.

Benefits of the present disclosure include a combustion section with a maximized ratio between the outlet of the fuel nozzle and the exposed area of the wall when compared to a conventional combustion section. For example, the conventional combustion section can include a plurality of fuel nozzles that normally include a circular outlet. The circular outlet is used as this configuration easily distributes stresses and pressures well. Further, the circular outlet is easier to seal against the wall that the fuel nozzle extends through. In some instances, the fuel nozzle can include a distal end with a non-circular footprint with multiple outlets formed along the distal end. However, a white space, similar to the bluff area, is formed between the multiple outlets along the distal end. Put another way, the use of the fuel nozzles in the conventional combustion section. The combustion section, as described herein, however, includes the fuel nozzle with the continuous curvilinear structure that maximizes the area of the outlet. Put another way, the ratio between the area of the outlet and the bluff area is larger than the same ratio in the conventional combustion section. The increase of this ratio, in turn, allows for a greater amount of mixture of fuel and air to be fed to the combustion chamber. Alternatively, the size of the combustion chamber or wall required to mount the fuel nozzle can be reduced without sacrificing the amount of the mixture of fuel and air that is fed to the combustion chamber. Put another way, in order to achieve the same volume of the mixture of fuel and air that is fed to the combustion chamber in the combustion section as described herein, and the conventional combustion section, a smaller area of the combustion chamber taken up by the fuel nozzle(s) is required.

To the extent not already described, the different features and structures of the various embodiments can be used in combination, or in substitution with each other as desired. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A turbine engine comprising a compression section, a combustion section, and a turbine section in serial flow arrangement, the combustion section comprising a wall at least partially forming a combustion chamber, the wall having a fuel nozzle opening, and a fuel nozzle extending through the fuel nozzle opening, the fuel nozzle comprising a fuel nozzle body having a centerline and a continuous curvilinear structure bounding an interior, the interior opening to the combustion chamber at an outlet, the continuous curvilinear structure terminating at a distal end and having a curvilinear centerline along the distal end, and a set of fuel injection channels provided within the fuel nozzle body and opening into the interior at a set of fuel injection orifices that are spaced axially about the fuel nozzle body relative to the curvilinear centerline.

A turbine engine comprising a compression section, a combustion section, and a turbine section in serial flow arrangement, the combustion section comprising a wall at least partially forming a combustion chamber, the wall having a fuel nozzle opening, and a fuel nozzle extending through the fuel nozzle opening, the fuel nozzle comprising a fuel nozzle body having a centerline and a continuous curvilinear structure bounding an interior, the interior opening to the combustion chamber at an outlet, the continuous curvilinear structure terminating at a distal end and having a curvilinear centerline along the distal end, and a set of fuel injection channels spaced axially about the fuel nozzle body relative to the curvilinear centerline.

The turbine engine of any preceding clause, wherein the combustion section further comprises a set of vortex generators provided along the fuel nozzle body and extending into the interior.

The turbine engine of any preceding clause, wherein the set of vortex generators include a plurality of vortex generators axially spaced about the fuel nozzle with respect to the curvilinear centerline.

The turbine engine of any preceding clause, wherein each vortex generator of the set of vortex generators is axially aligned with at least one fuel injection orifice of the set of fuel injection orifices, with respect to the curvilinear centerline.

The turbine engine of any preceding clause, wherein each vortex generator of the set of vortex generators includes a trailing edge, with at least one fuel injection orifice of the set of fuel injection orifices being axially aligned with the trailing edge, with respect to the curvilinear centerline.

The turbine engine of any preceding clause, further comprising a set of air channels opening into the interior at a set of air injection orifices that are spaced about the fuel nozzle body relative to the curvilinear centerline, with at least a portion of the set of air injection orifices being axially aligned with the set of vortex generators, with respect to the curvilinear centerline.

The turbine engine of any preceding clause, wherein each vortex generator of the set of vortex generators is one of a delta wing vortex generator, a counter-rotating vortex generator, a double-sided wedge, wheeler vortex generator, a wing vortex generator, a winglet vortex generator, a Kuethe vortex generator, a wishbone vortex generator, a hairpin vortex generator, a lobed vortex generator, or a wave-type vortex generator.

The turbine engine of any preceding clause, wherein at least two fuel injection orifices of the set of fuel injection orifices are axially aligned on radially opposing sides of the continuous curvilinear structure.

The turbine engine of any preceding clause, wherein the combustion section further comprises a one or more centerbodies, with at least one centerbody of the one or more centerbodies including a central fuel channel having a set of fuel jets opening into the interior.

The turbine engine of any preceding clause, wherein at least one fuel jet of the set of fuel jets is axially offset from the set of fuel injection orifices.

The turbine engine of any preceding clause, wherein at least one fuel jet of the set of fuel jets is provided axially upstream of the set of fuel injection orifices.

The turbine engine of any preceding clause, wherein the combustion section further comprises a set of vortex generators provided along the fuel nozzle body and extending into the interior.

The turbine engine of any preceding clause, wherein the set of fuel jets and the set of fuel injection orifices are provided axially downstream of the set of vortex generators.

The turbine engine of any preceding clause, wherein the one or more centerbodies includes a plurality of centerbodies.

The turbine engine of any preceding clause, wherein the fuel nozzle further comprises a plurality of centerbodies extending into the interior.

The turbine engine of any preceding clause, wherein at least one of the centerbodies of the plurality of centerbodies has a central fuel channel including at least one fuel injection orifice opening to the interior at a fuel injection orifice.

The turbine engine of any preceding clause, wherein the curvilinear centerline is in the form of one of a racetrack, a spiral, an oval, or a star.

The turbine engine of any preceding clause, wherein the combustion section includes a plurality of fuel nozzles, with each fuel nozzle having a respective curvilinear centerline.

The turbine engine of any preceding clause, wherein at least two fuel nozzles of the plurality of fuel nozzles include identical or non-identical shapes defined by their respective curvilinear centerline.

The turbine engine of any preceding clause, wherein the fuel nozzle is configured to exhaust a hydrogen-containing fuel into the interior.

The turbine engine of any preceding clause, wherein the curvilinear centerline is in is in the form of a racetrack having opposing linear sections and opposing curved sections.

The turbine engine of any preceding clause, wherein the fuel nozzle further comprises a plurality of vortex generators.

The turbine engine of any preceding clause, wherein the plurality of vortex generators are provided along at least one of the opposing linear sections and opposing curved sections.

The turbine engine of any preceding clause, wherein the curvilinear centerline is in a non-linear formation.

The turbine engine of any preceding clause, wherein the non-linear formation is a spiral formation that extends between a first circumferential end and a second circumferential end, wherein the first circumferential end is greater than 2π radians and less than or equal to 20π radians from the second circumferential end

The turbine engine of any preceding clause, wherein the fuel nozzle is the only fuel nozzle of the combustion section.

The turbine engine of any preceding clause, wherein the continuous curvilinear structure forms a helical formation.

The turbine engine of any preceding clause, wherein the continuous curvilinear structure forms a star formation including a set of legs.

The turbine engine of any preceding clause, wherein each leg of the set of legs define an equal area of the outlet.

The turbine engine of any preceding clause, wherein at least two legs of the set of legs define non-equal areas of the outlet.

The turbine engine of any preceding clause, wherein the wall is a dome wall.

The turbine engine of any preceding clause, wherein the wall is a combustor liner.

The turbine engine of any preceding clause, wherein the fuel nozzle is included within a set of fuel nozzles, with each fuel nozzle having an outlet area defined as a solid area that confronts the combustion chamber, and the wall includes a bluff area and the fuel nozzle includes an outlet area defined as a total area that the fuel nozzle, with a summation of the outlet area being greater than or equal to 10% and less than or equal to 400% of the bluff area.

## Claims

1. A turbine engine (10) comprising:
a compression section (12), a combustion section (14, 200, 400), and a turbine section (16) in serial flow arrangement, the combustion section (14, 200, 400) comprising:
a wall (44, 46, 202, 402, 466, 468) at least partially forming a combustion chamber (46, 204), the wall (44, 46, 202, 402, 466, 468) having a fuel nozzle (206, 306, 406, 506) opening (203); and
a fuel nozzle (206, 306, 406, 506) extending through fuel nozzle opening (203), the fuel nozzle (206, 306, 406, 506) comprising:
a fuel nozzle body (208, 308, 408, 508) having a centerline (226, 326, 426, 526) and a continuous curvilinear structure (210, 310, 410, 510) bounding an interior (220, 320, 420, 520), the interior (220, 320, 420, 520) opening to the combustion chamber (46, 204) at an outlet (222, 322, 422, 522), the continuous curvilinear structure (210, 310, 410, 510) terminating at a distal end (212, 312, 412, 512) and having a curvilinear centerline (224, 324, 424, 524) along the distal end (212, 312, 412, 512); and
a set of fuel injection channels (230, 330) provided within the fuel nozzle body (208, 308, 408, 508) and opening into the interior (220, 320, 420, 520) at a set of fuel injection orifices (232, 332) that are spaced axially about the fuel nozzle body (208, 308, 408, 508) relative to the curvilinear centerline (224, 324, 424, 524).

2. The turbine engine (10) of claim 2, wherein the combustion section (14, 200, 400) further comprises a set of vortex generators (250, 350) provided along the fuel nozzle body (208, 308, 408, 508) and extending into the interior (220, 320, 420, 520).

3. The turbine engine (10) of claim 2, wherein each vortex generator of the set of vortex generators (250, 350) is axially aligned with at least one fuel injection orifice (222, 322, 422, 522) of the set of fuel injection orifices (222, 322, 422, 522), with respect to the curvilinear centerline (224, 324, 424, 524).

4. The turbine engine (10) of claim 3, wherein each vortex generator of the set of vortex generators (250, 350) includes a trailing edge (254), with at least one fuel injection orifice (222, 322, 422, 522) of the set of fuel injection orifices (222, 322, 422, 522) being axially aligned with the trailing edge (254), with respect to the curvilinear centerline (224, 324, 424, 524).

5. The turbine engine (10) of claim 2, further comprising a set of air channels (236) opening into the interior (220, 320, 420, 520) at a set of air injection orifices (238) that are spaced about the fuel nozzle body (208, 308, 408, 508) relative to the curvilinear centerline (224, 324, 424, 524), with at least a portion of the set of air injection orifices (238) being axially aligned with the set of vortex generators (250, 350), with respect to the curvilinear centerline (224, 324, 424, 524).

6. The turbine engine (10) of any of claims 1-5, wherein at least two fuel injection orifices of the set of fuel injection orifices (232, 332) are axially aligned on radially opposing sides of the continuous curvilinear structure (210, 310, 410, 510).

7. The turbine engine (10) of claim 6, wherein the combustion section (14, 200, 400) further comprises a one or more centerbodies (216, 316), with at least one centerbody of the one or more centerbodies (216, 316) including a central fuel channel (242, 342) having a set fuel jets (244, 344) opening into the interior (220, 320, 420, 520).

8. The turbine engine (10) of claim 7, wherein at least one fuel jet of the set of fuel jets (244, 344) is axially offset from the set of fuel injection orifices (232, 332).

9. The turbine engine (10) of claim 8, wherein at least one fuel jet of the set of fuel jets (244, 344) is provided axially upstream of the set of fuel injection orifices (232, 332).

10. The turbine engine (10) of claim 7, wherein the combustion section (14, 200, 400) further comprises a set of vortex generators (250, 350) provided along the fuel nozzle body (208, 308, 408, 508) and extending into the interior (220, 320, 420, 520).

11. The turbine engine (10) of claim 10, wherein the set of fuel jets (244, 344) and the set of fuel injection orifices (232, 332) are provided axially downstream of the set of vortex generators (250, 350).

12. The turbine engine (10) of claim 7, wherein the one or more centerbodies (216, 316) includes a plurality of centerbodies (216, 316) axially spaced from one another with respect to the curvilinear centerline (224, 324, 424, 524).

13. The turbine engine (10) of any of claims 1-12, wherein the fuel nozzle (206, 306, 406, 506) further comprises a plurality of centerbodies (216, 316) extend through a portion of the interior (220, 320, 420, 520).

14. The turbine engine (10) of any of claims 1-13, wherein the combustion section (14, 200, 400) includes a plurality of fuel nozzle (206, 306, 406, 506)s, with each fuel nozzle (206, 306, 406, 506) having a respective curvilinear centerline (224, 324, 424, 524).

15. The turbine engine (10) of any of claims 1-14, wherein the fuel nozzle (206, 306, 406, 506) is configured to exhaust a hydrogen-containing fuel into the interior (220, 320, 420, 520).
